# EUROPEAN PATENT APPLICATION

(11) **EP 1 870 295 A1**
(43) Date of publication of application: **26.12.2007**
(21) Application number: 07011135.6
(22) Date of filing: 06.06.2007
(51) Int. Cl.: B60R 21/015

(54) **Vehicle occupant detecting system, operation device controlling system, and vehicle**

(30) Priority: 20.06.2006 JP 2006170131
(71) Applicant: TAKATA CORPORATION, Minato-ku, Tokyo 106-8510 (JP)
(72) Inventor: Aoki, Hiroshi, Tokyo 106-8510 (JP); Yokoo, Masato, Tokyo 106-8510 (JP); Hakomori, Yuu, Tokyo 106-8510 (JP)
(74) Representative: Banzer, Hans-Jörg

(57) **Abstract**

In order to provide a technology, relating to a vehicle occupant detecting system (100) to be installed in a vehicle, which is effective for easily and precisely detecting information about a vehicle occupant (C) on a vehicle seat (12, 22), a vehicle occupant detecting system (100) which is installed in a vehicle employs a system for detecting a three-dimensional surface profile of a vehicle occupant (C) from a single view point by a camera (112) to detect a distance between predetermined regions and/or a position of a predetermined region of the vehicle occupant (C), thereby detecting the physique and/or the attitude of the vehicle occupant (C).

## Description

### [Technical Field of the Invention]

The present invention relates to an object detecting technology which is adapted to a vehicle and, more particularly, to a technology for developing a detecting system for detecting information about a vehicle occupant on a vehicle seat.

### [Background of the Invention]

Conventionally, there are known various technologies for detecting information about an object occupying a vehicle seat by using a photographing means such as a camera. For example, disclosed in JP-A-2003-294855 is a configuration of a vehicle occupant detecting apparatus in which a camera capable of two-dimensionally photographing an object is arranged in front of a vehicle occupant to detect the position of the vehicle occupant sitting in a vehicle seat.

### [Disclosure of the Invention]

### [Problems to be solved by the Invention]

By the way, there is a demand for technology for easily and precisely detecting information about a vehicle occupant such as the body size and the attitude of the vehicle occupant to be used for controlling an operation device such as an airbag device. However, with such a structure as to two-dimensionally photograph a vehicle occupant by a camera just like the vehicle occupant detecting apparatus disclosed in the aforementioned JP-A-2003-294855, it is difficult to precisely detect information about the vehicle occupant because of the following reasons. That is, when there is a small difference in color between the background and the vehicle occupant or a small difference in color between the skin and the clothes of the vehicle occupant, a problem arises that it is difficult to securely detect the vehicle occupant itself or a predetermined region of the vehicle occupant. In case of detecting, for example, a seated height of a vehicle occupant (length between the shoulder and the hip) by photographing the vehicle occupant from the front side of the vehicle, a problem arises that a detected seated height of the vehicle occupant leaning forward must be shorter than the actual seated height, i.e. an error in detection is caused. Further, in case of detecting a predetermined region by photographing the vehicle occupant from a front part of a vehicle, a problem arises that it is hard to recognize the anteroposterior position of the predetermined region. For example, in case of detecting a head of a vehicle occupant, it is hard to recognize the relation in the anteroposterior position of the head between when the vehicle occupant leans forward and when the vehicle occupant sits in the normal state.

The present invention is made in view of the aforementioned point and it is an object of the present invention to provide a technology, relating to a vehicle occupant detecting system to be installed in a vehicle, which is effective for easily and precisely detecting information about a vehicle occupant on a vehicle seat.

### [Means to solve the Problems]

According to the present invention, this object is achieved by a vehicle occupant detecting system as defined in claim 1 or claim 3, an operation device controlling system as defined in claim 4 and a vehicle as defined in claim 5. The dependent claim defines preferred and advantageous embodiments of the invention.

For achieving the object, the present invention is configured. Though the present invention is typically adapted to a detecting system in an automobile for detecting information about a vehicle occupant on a vehicle seat, the present invention can be also adapted to a technology for developing a detecting system in a vehicle other than the automobile for detecting information about a vehicle occupant on a vehicle seat.

According to a first aspect of the present invention for achieving the aforementioned object a vehicle occupant detecting system is provided.

The vehicle occupant detecting system is structured to detect information about a vehicle occupant on a vehicle seat and comprises at least a three-dimensional surface profile detecting means, a digitizing means, a storing means, a position detecting means, and a processing means. The "information about a vehicle occupant" includes the configuration (physique and body size), the attitude, the kind, and the presence of a vehicle occupant who sits in a driver's seat, a front passenger seat, or a rear seat.

The three-dimensional surface profile detecting means is disposed to face a vehicle seat and is structured as a means having a function of detecting a three-dimensional surface profile of a vehicle occupant on the vehicle seat from a single view point. This structure is achieved by installing a 3D camera, capable of detecting a three-dimensional surface profile, inside a vehicle cabin. The "single view point" used here means a style where the number of installation places of the camera is one, that is, a single camera is mounted at a single place. As the camera capable of taking images from a single view point, a 3-D type monocular C-MOS camera or a 3-D type pantoscopic stereo camera may be employed. Since all that's required by the present invention is the installation of a single camera which is focused on the vehicle seat with regard to the "single view point", the present invention does not avoid the installation of another camera or another view point for another purpose. The three-dimensional surface profile detecting means of this invention is disposed to face the vehicle seat and is thus capable of detecting a three-dimensional surface profile of an object occupying the vehicle seat such as a vehicle occupant and a child seat from a single view point. By such a means of detecting a three-dimensional surface profile, precise detection as compared with the system of detecting two-dimensional image can be ensured even when there is a small difference in color between the background and the vehicle occupant or a small difference in color between the skin and the clothes of the vehicle occupant, even in case of detecting the seated height of the vehicle occupant who is in a state leaning forward, or even in case of detecting the position of the head of the vehicle occupant who is in a state leaning forward.

The digitizing means is structured as a means having a function of digitizing the three-dimensional surface profile detected by the three-dimensional surface profile detecting means into a numerical coordinate system. The three-dimensional surface profile of the object on the vehicle seat from a single view point detected by the three-dimensional surface profile detecting means is digitized into a numerical coordinate system.

The storing means is structured as a means of previously storing information of features on three-dimensional surface profile of a plurality of regions among respective regions of a human body. The "plurality of regions" used here may be suitably selected from head, neck, shoulder, upper arm, forearm, hip, upper thigh, lower thigh, knee, chest, and the like of a human body. As for pair regions each composed of a right part and a left part, a pair of such regions may be employed as one of the plurality of regions. The "information of features" used here indicates features on three-dimensional surface profile of the predetermined regions. For example, the features may include a kind of three-dimensional surface profile detected as the predetermined region when seeing the predetermined region from a specific direction. Specifically, since a head of a human body is generally spherical, information of feature about the head that the three-dimensional surface profile of the head is detected as a convex shape in both cases of seeing it from above and of seeing it from side is previously stored in the storing means.

The position detecting means is structured as a means for detecting information about positions of a plurality of regions of the vehicle occupant by correlating the numerical coordinate system digitized by the digitizing means to the information of features previously stored in the storing means. That is, in this invention, the position of the predetermined region is detected by specifying a region, having a same feature as the feature of the predetermined region previously stored, in image information actually detected by the three-dimensional surface profile as the predetermined region.

The processing means is structured as a means having a function of computing a distance between predetermined regions using information detected by the position detecting means and deriving the physique of the vehicle occupant based on the computed distance between the predetermined regions.

The plurality of regions are specified by the position detecting means. Using this positional information, a distance between predetermined regions can be computed. The "distance between regions" used here may be a length of a line directly connecting two regions or a length of a line continuously connecting three or more regions. Many distances between regions of the vehicle occupant are closely correlated with the physique. Therefore, by previously correlating the distances between regions to the physique, the physique of the vehicle occupant can be determined. A shoulder width (a distance between both shoulder joints) and a seated height (a distance between a shoulder and a hip) of the vehicle occupant may be employed as the distance between regions. As mentioned above, in this invention, the physique of the vehicle occupant can be easily and precisely detected using the result of detection of the distance between predetermined regions of the vehicle occupant.

According to the vehicle occupant detecting system having the aforementioned structure, the physique of the vehicle occupant can be easily and precisely detected as information about the vehicle occupant on the vehicle seat.

According to an embodiment of the present invention for achieving the aforementioned object in the vehicle occupant detecting system, the processing means computes a shoulder width as the distance between the predetermined regions of the vehicle occupant and derives the physique of the vehicle occupant based on the computed shoulder width of the vehicle occupant. Here, the shoulder width of the vehicle occupant is used as a distance between regions which is closely correlated with the physique especially among respective distances between regions.

Therefore, according to the vehicle occupant detecting system having the aforementioned structure, the precision of determination of the physique of the vehicle occupant can be improved.

According to a second aspect of the present invention for achieving the aforementioned object another vehicle occupant detecting system is provided.

This vehicle occupant detecting system is structured to detect information about a vehicle occupant on a vehicle seat and comprises at least a three-dimensional surface profile detecting means, a digitizing means, a storing means, a position detecting means, and a processing means. The three-dimensional surface profile detecting means, the digitizing means, the storing means, and the position detecting means of this invention are means similar to the three-dimensional surface profile detecting means, the digitizing means, the storing means, and the position detecting means of the vehicle occupant detecting system as described above. Especially, in the storing means, information of feature on three-dimensional surface profile of at least one predetermined region among respective regions of a human body is stored. In addition, the position detecting means of this invention detects positional information about at least one predetermined region of the vehicle occupant.

The processing means is structured as a means of determining whether or not the vehicle occupant sits in the vehicle seat in an attitude of normal state based on the information detected by the position detecting means, i.e. the position of at least one predetermined region of the vehicle occupant. The "normal state" used here means a state that, in the normal position (standard sitting position) on the vehicle seat, the back of the vehicle occupant closely touches the seat back and the head of the vehicle occupant is located adjacent to the front surface of the head rest. Position out of the normal position is called outlying position relating to the driver C, so called "out-of-position (OOP)". For example, when as a result of detection of the head position of the vehicle occupant, the head of the vehicle occupant is in a standard zone previously stored, it is determined that the vehicle occupant sits in the vehicle occupant in an attitude of the normal state. On the other hand, when the head is in an outlying zone of the standard zone previously stored, it is determined that the vehicle occupant does not sit in the vehicle seat in the normal state. As mentioned above, the attitude of the vehicle occupant can be easily detected using the result of detection of the position of the predetermined region of the vehicle occupant.

According to the vehicle occupant detecting system having the aforementioned structure, the attitude of the vehicle occupant can be easily and precisely detected as information about the vehicle occupant on the vehicle seat.

According to a third aspect of the present invention for achieving the aforementioned object an operation device controlling system is provided.

The operation device controlling system comprises at least a vehicle occupant detecting system as described above, an operation device, and an actuation control means.

The operation device is actuated based on information obtained by the processing means of the vehicle occupant detecting system and is controlled its actuation by the actuation control means of this invention. As the operation device, an arrangement for informing of the detected information about the vehicle occupant itself and an arrangement for changing the mode of occupant restraint by an airbag and/or a seat belt according to the information may be employed.

Therefore, according to the structure of the operation device controlling system, the actuation of the operation device can be controlled in a suitable mode according to the result of the detection of the vehicle occupant detecting system, thereby enabling detailed control for the operation device.

According to a fourth aspect of the present invention for achieving the aforementioned object a vehicle is provided.

The vehicle comprises at least: an engine/running system; an electrical system; an actuation control device; and a vehicle occupant detecting means. The engine/running system is a system involving an engine and a running mechanism of the vehicle. The electrical system is a system involving electrical parts used in the vehicle. The actuation control device is a device having a function of conducting the actuation control of the engine/running system and the electrical system. The vehicle occupant detecting means of this invention is structured as a means for detecting information about a vehicle occupant on a vehicle seat. The vehicle occupant detecting means comprises a vehicle occupant detecting system as described above.

According to this arrangement, there is provided a vehicle mounted with a vehicle occupant detecting system capable of easily and precisely detecting the information about the vehicle occupant on the vehicle seat.

### [Effects of the Invention]

As described in the above, according to the present invention, a system is structured to detect a distance between predetermined regions and/or a position of a predetermined region of a vehicle occupant on a vehicle seat by a three-dimensional surface profile detecting means capable of detecting a three-dimensional surface profile of the vehicle occupant from a single view point, thereby easily and precisely detecting the physique and/or the attitude of the vehicle occupant.

### [Brief Explanation of the drawings]

Fig. 1 is an illustration showing a system structure of a vehicle occupant detecting system 100, which is installed in a vehicle, according to an embodiment.
Fig. 2 is a perspective view showing a vehicle cabin taken from a camera 112 side of the embodiment.
Fig. 3 is a flow chart of "operation device control process" for controlling the operation device 210 of the embodiment.
Fig. 4 is a flow chart of "physique determining process" of the embodiment.
Fig. 5 is an illustration showing an aspect of pixel segmentation in the embodiment.
Fig. 6 is an illustration showing a segmentation-processed image C1 of the embodiment.
Fig. 7 is an illustration showing a segmentation-processed image C2 of the embodiment.
Fig. 8 is a table indicating information of regional features of the embodiment.
Fig. 9 is an illustration showing results of detection of respective regions of a driver C in the embodiment
Fig. 10 is a flow chart of "attitude determining process" of the embodiment.

### [Best Modes for carrying out the Invention]

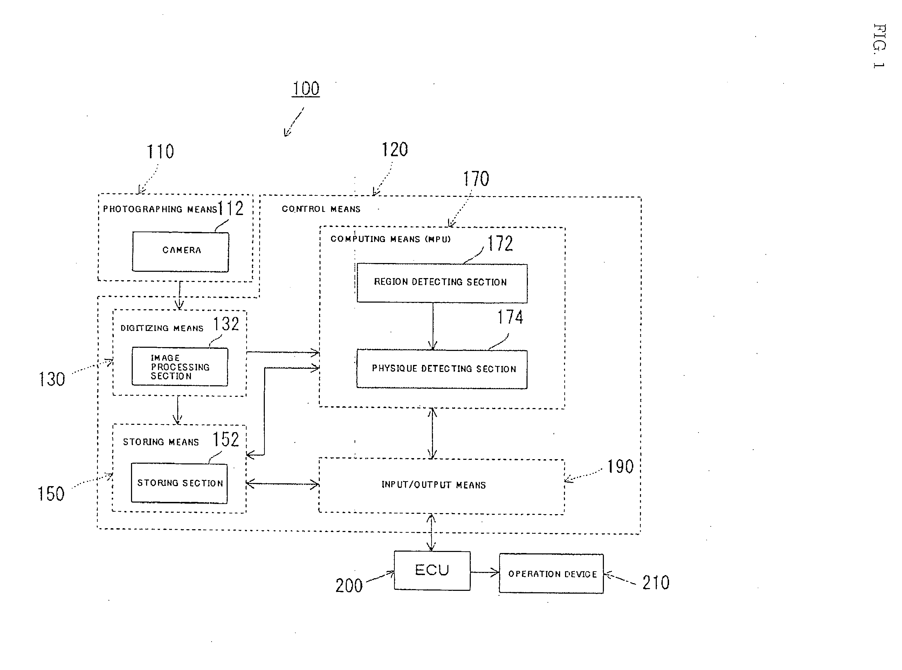

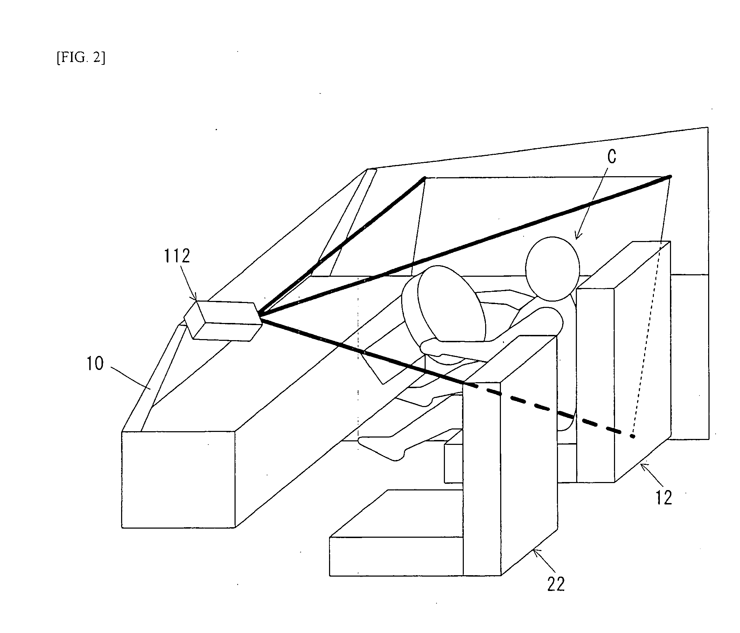

Hereinafter, description will be made as regard to embodiments of the present invention with reference to drawings. First, a vehicle occupant detecting system 100 as an embodiment of the "vehicle occupant detecting system (vehicle occupant detecting means)" according to the present invention will be described with reference to Fig. 1 and Fig. 2.

The structure of the vehicle occupant detecting system 100, which is installed in a vehicle, of this embodiment is shown in Fig. 1.

The vehicle occupant detecting system 100 of this embodiment is installed in an automobile as the "vehicle" of the present invention for detecting at least information about a vehicle occupant. As shown in Fig. 1, the vehicle occupant detecting system 100 mainly comprises a photographing means 110 and a control means 120. Further, the vehicle occupant detecting system 100 cooperates together with an ECU 200 as an actuation control device for the vehicle and an operation device 210 to compose the "operation device controlling system" of the present invention. The vehicle comprises, but not shown, an engine/running system involving an engine and a running mechanism of the vehicle, an electrical system involving electrical parts used in the vehicle, and an actuation control device (ECU 200) for conducting the actuation control of the engine/running system and the electrical system.

The photographing means 110 of this embodiment includes a camera 112 as the photographing device and a data transfer circuit (not shown). The camera 112 is a 3-D (three-dimensional) camera (sometimes called "monitor") of a C-MOS or CCD (charge-coupled device) type in which light sensors are arranged into an array (lattice) arrangement. The camera 112 comprises an optical lens and a distance measuring image chip such as a CCD (charge-coupled device) or C-MOS chip, but not especially shown. Light incident on the distance measuring image chip through the optical lens is focused on a focusing area of the distance measuring image chip. With respect to the camera 112, a light source for emitting light to an object may be suitably arranged. By the camera 112 having the aforementioned structure, information about distance relative to the object is measured a plurality of times to detect a three-dimensional surface profile which is used to identify the presence or absence, the size, the position, the attitude, and the movement of the object.

The camera 112 having the aforementioned structure is mounted, in a embedding manner, to an instrument panel in a frontward portion of the automobile, an area around an A-pillar, or an area around a windshield of the automobile in such a manner as to face one or a plurality of vehicle seats. As an installation example of the camera 112, a perspective view of a vehicle cabin taken from a side of the camera 112 of this embodiment is shown in Fig. 2. As shown in Fig. 2, the camera 112 is disposed at an upper portion of an A-pillar 10 on a side of a front passenger seat 22 to be directed in a direction capable of photographing an occupant C on a driver's seat 12 to take an image with the occupant C positioned on the center thereof. The camera 112 is set to start its photographing operation, for example, when an ignition key is turned ON or when a seat sensor (not shown) installed in the driver seat detects a vehicle occupant sitting in the driver seat.

The control means 120 of this embodiment further comprises at least a digitizing means 130, a storing means 150, a computing means (MPU) 170, an input/output means 190, and peripheral devices, not shown (see Fig. 1).

The digitizing means 130 comprises an image processing section 132 which conducts camera control for controlling the camera to obtain good quality images and image processing control for processing images taken by the camera 112 to be used for analysis. Specifically, as for the control of the camera, the adjustment of the frame rate, the shutter speed, and the sensitivity, and the accuracy correction are conducted to control the dynamic range, the brightness, and the white balance. As for the image processing control, the spin compensation for image, the correction for distortion of the lens, the filtering operation, and the difference operation as image preprocessing operations are conducted and the configuration determination and the trucking as image recognition processing operations are conducted. The digitizing means 130 also performs a process for digitizing a three-dimensional surface profile detected by the camera 112 into a numerical coordinate system.

The storing means 150 comprises a storing section 152 and is a means for storing (recording) data for correction, buffer frame memory for preprocessing, defined data for recognition computing, reference patterns, the image processing results of the image processing section 132 of the digitizing means 130, and the computed results of the computing means 170 as well as an operation control software. The storing means 150 of this embodiment previously stores information of regional features required for detecting respective regions of a human body from the contours of the three-dimensional surface profile obtained by the photographing means 110 and information of physique indicating relations between the distances between predetermined regions and physiques, as will be described in detail. The stored information of regional features and information of physique are used in "physique determining process" as will be described later. The storing means 150 (the storing section 152) corresponds to the "storing means for previously storing information of features on three-dimensional surface profile of a plurality of regions among respective regions of a human body" of the present invention.

The computing means 170 of this embodiment is a means for extracting information about the vehicle occupant (the driver C in Fig. 2) as a object based on the information obtained by the process of the image processing section 132 and comprises at least a region detecting section 172 and a physique detecting section 174. The region detecting section 172 has a function of detecting the positions of a plurality of predetermined regions among respective regions of the driver C from images taken by the photographing means 110. The physique detecting section 174 has a function of computing distances between the predetermined regions from the predetermined regions detected by the region detecting section 172 and a function of detecting the physique of the driver C based on the result of the computing. The region detecting section 172 of the computing means 170 composes "position detecting means for detecting information about positions of a plurality of regions of the vehicle occupant" or "position detecting means for detecting information about the position of a predetermined region of the vehicle occupant" of the present invention. The physique detecting section 174 of the computing means 170 composes "processing means for computing a distance between predetermined regions using information detected by the position detecting means and deriving the physique of the vehicle occupant based on the computed distance between the predetermined regions" of the present invention.

The input/output means 190 inputs information about the vehicle, information about traffic conditions around the vehicle, information about weather condition and about time zone, and the like to the ECU 200 for conducting controls of the whole vehicle and outputs recognition results. As the information about the vehicle, there are, for example, the state (open or closed) of a vehicle door, the wearing state of the seat belt, the operation of brakes, the vehicle speed, and the steering angle. In this embodiment, based on the information outputted from the input/output means 190, the ECU 200 outputs actuation control signals to the operation device 210 as an object to be operated. The operation device 210 corresponds to the "operation device" of the present invention. The ECU 200 for controlling the actuation of the operation device 210 corresponds to the "actuation control means" of the present invention. As concrete examples of the operation device 210, there are an occupant restraining device for restraining an occupant by an airbag and/or a seat belt and a device for outputting warning or alarm signals (display, sound and so on), and the like.

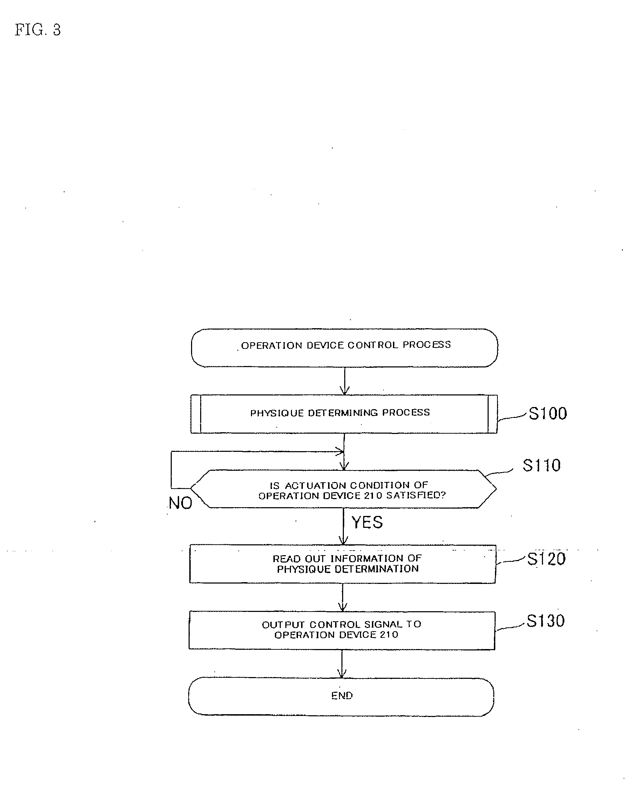

Hereinafter, the action of the vehicle occupant detecting system 100 having the aforementioned structure will be described with reference to Fig. 3 through Fig. 9 in addition to Fig. 1 and Fig. 2.

Fig. 3 is a flow chart of "operation device control process" for controlling the operation device 210 of this embodiment. In this embodiment, the "operation device control process" is carried out by the ECU 200 based on the results of detection of the vehicle occupant detecting system 100 shown in Fig. 1.

In the operation device control process of this embodiment, a physique determining process is first conducted at step S100 shown in Fig. 3. When the actuation condition of the operation device 210 is satisfied at step S120, the physique information obtained by the physique determining process is read out from the storing means 150 (the storing section 152) shown in Fig. 1 and an actuation control signal to the operation device 210 is outputted at step S130, as will be described in detail later. Therefore, the control of the operation device 210 is conducted based on the information of physique determination.

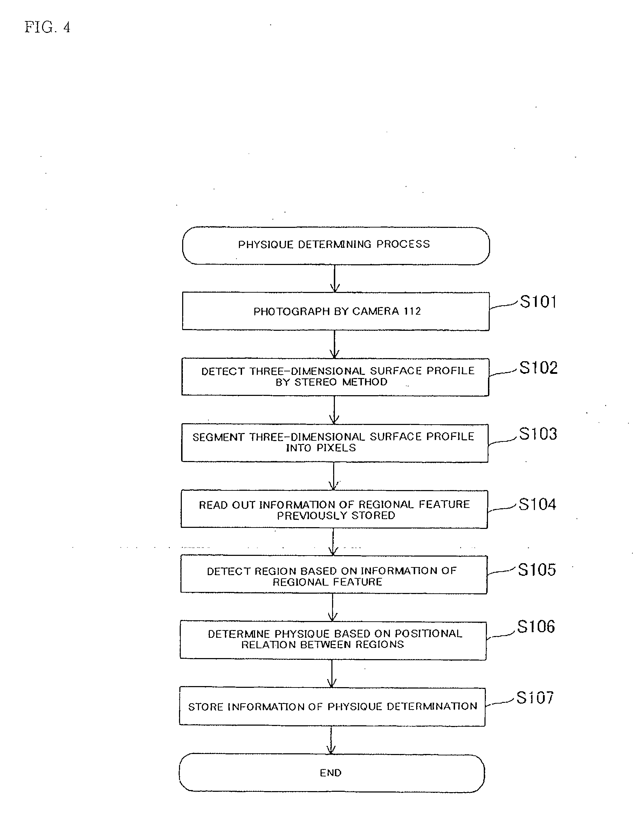

Fig. 4 is a flow chart of the "physique determining process" of this embodiment. In this embodiment, the "physique determining process" is carried out by the control means 120 of the vehicle occupant detecting system 100 shown in Fig. 1.

In the physique determining process, image is taken by the camera 112 such that a driver (the driver C in Fig. 2) is positioned at the center of the image at step S101 shown in Fig. 4. The camera 112 of this embodiment is a camera for detecting a three-dimensional surface profile of the driver C on the driver's seat (the driver's seat 12 in Fig. 2) from a single view point and composes the "three-dimensional surface profile detecting means" of the present invention. The "single view point" used here means a style where the number of installation places of the camera is one, that is, a single camera is mounted at a single place. As the camera capable of taking images from a single view point, a 3-D type monocular C-MOS camera or a 3-D type pantoscopic stereo camera may be employed.

At step S102 in Fig. 4, a three-dimensional surface profile of the driver C is detected in a stereo method. The stereo method is a known technology as a method comprising disposing two cameras on left and right sides just like both eyes of a human being, obtaining a parallax between the cameras from images taken by the left camera and the right camera, and measuring a range image based on the parallax, but detail description of this method will be omitted.

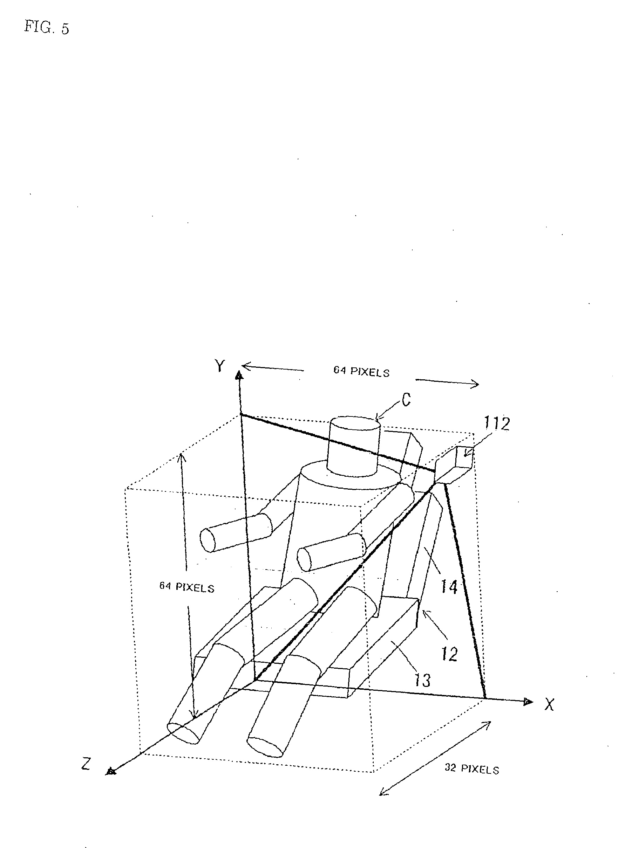

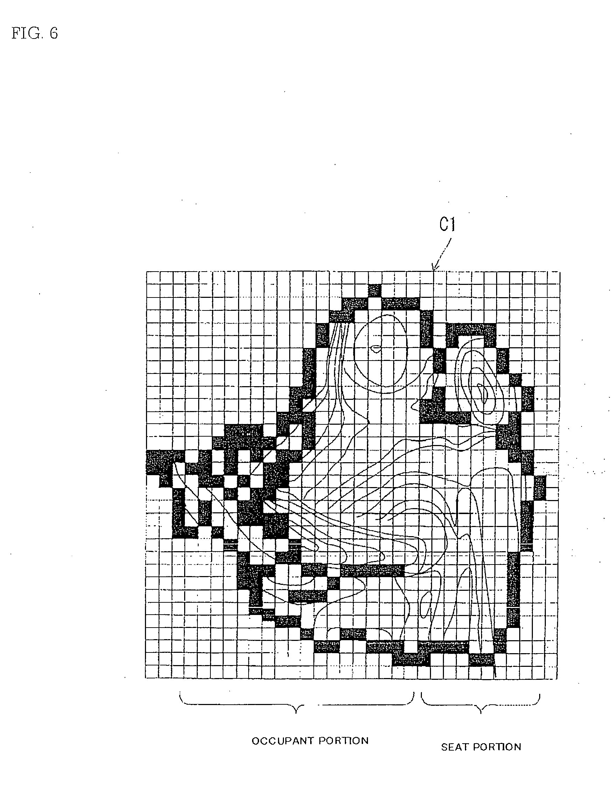

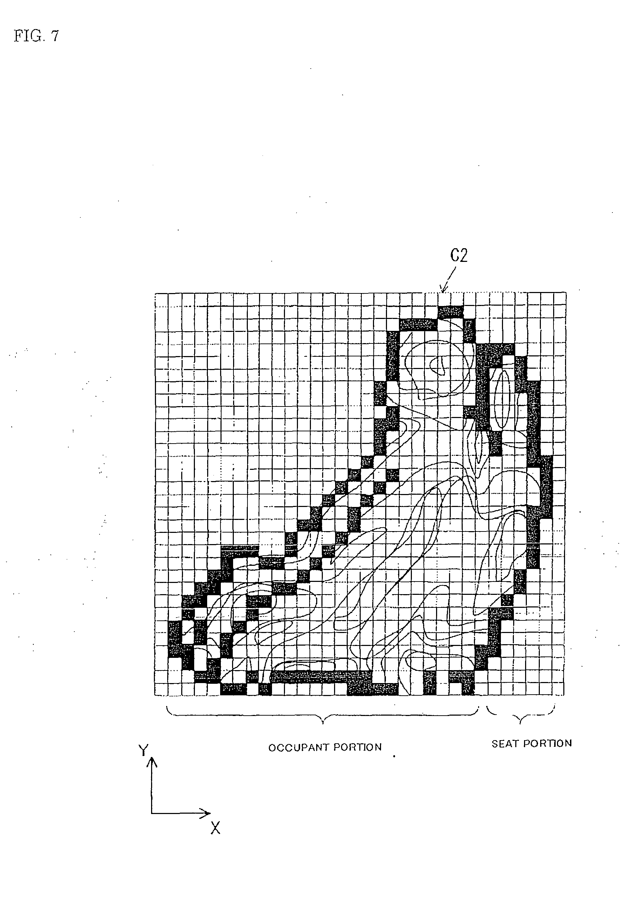

At step S103 in Fig. 4, a segmentation process is conducted to segment a dot image of the three-dimensional surface profile obtained at step S102 into a large number of pixels. The segmentation process is carried out by the image processing section 132 of the digitizing means 130 in Fig. 1. In the segmentation process, the dot image of the three-dimensional surface profile is segmented into three-dimensional lattices (X64) × (Y64) × (Z32). An aspect of pixel segmentation in this embodiment is shown in Fig. 5. As shown in Fig. 5, the center of a plane to be photographed by the camera is set as an origin, an X axis is set as lateral, a Y axis is set as vertical, and a Z axis is set as anteroposterior. With respect to the dot image of the three-dimensional surface profile, a certain range of the X axis and a certain range of the Y axis are segmented into respective 64 pixels, and a certain range of the Z axis is segmented into 32 pixels. It should be noted that, if a plurality of dots are superposed on the same pixel, an average is employed. According to the process, a segmentation-processed image C1 of the three-dimensional surface profile as shown in Fig. 6 is obtained for example. Fig. 6 is an illustration showing a segmentation-processed image C1 of this embodiment. The segmentation-processed image C1 corresponds to a perspective view of the driver C taken from the camera 112 side and shows a coordinate system about the camera 112. Further, a segmentation-processed image C2 converted into a coordinate system about the vehicle body is obtained. Fig. 7 shows the segmentation-processed image C2 of this embodiment. As mentioned above, the image processing section 132 for conducting the process for obtaining the segmentation-processed images C1 and C2 is a digitizing means for digitizing the three-dimensional surface profile detected by the camera 112 into numerical coordinate systems and thus corresponds to the "digitizing means" of the present invention.

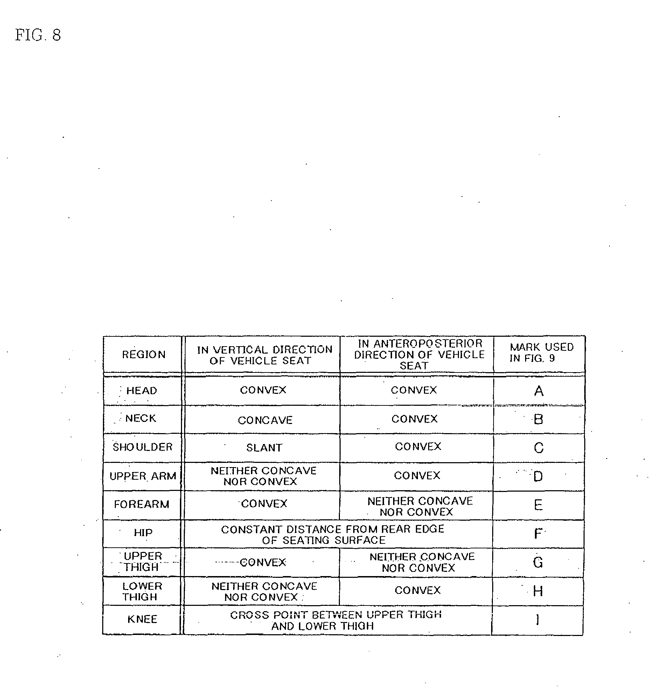

Then, at step S104 in Fig. 4, a process for reading out information of regional features previously stored in the storing means 150 (the storing section 152) is conducted. The information of regional features of this embodiment is indicated in Fig. 8.

As shown in Fig. 8, respective regions of a human body each have features on its profile when its three-dimensional surface profile is scanned parallel to the vertical direction and the anteroposterior direction of the vehicle seat. That is, since head is generally spherical, head is detected as a convex shape in both cases of scanning its three-dimensional surface profile parallel to the vertical direction of the vehicle seat and of scanning its three-dimensional surface profile parallel to the anteroposterior direction of the vehicle seat. Neck is detected as a concave shape in case of scanning its three-dimensional surface profile parallel to the vertical direction of the vehicle seat and is detected as a convex shape in case of scanning its three-dimensional surface profile parallel to the anteroposterior direction of the vehicle seat. Shoulder is detected as a slant shape in case of scanning its three-dimensional surface profile parallel to the vertical direction of the vehicle seat and is detected as a convex shape in case of scanning its three-dimensional surface profile parallel to the anteroposterior direction of the vehicle seat. Upper arm is detected as a convex shape in case of scanning its three-dimensional surface profile parallel to the anteroposterior direction of the vehicle seat. Forearm is detected as a convex shape in case of scanning its three-dimensional surface profile parallel to the vertical direction of the vehicle seat. Hip is detected by a feature having a constant distance from a rear edge of a seating surface (seat cushion) of the vehicle seat. Upper thigh is detected as a convex shape in case of scanning its three-dimensional surface profile parallel to the vertical direction of the vehicle seat. Lower thigh is detected as a convex shape in case of scanning its three-dimensional surface profile to the anteroposterior direction of the vehicle seat. Knee is detected by a feature as a cross point between the upper thigh and the lower thigh.

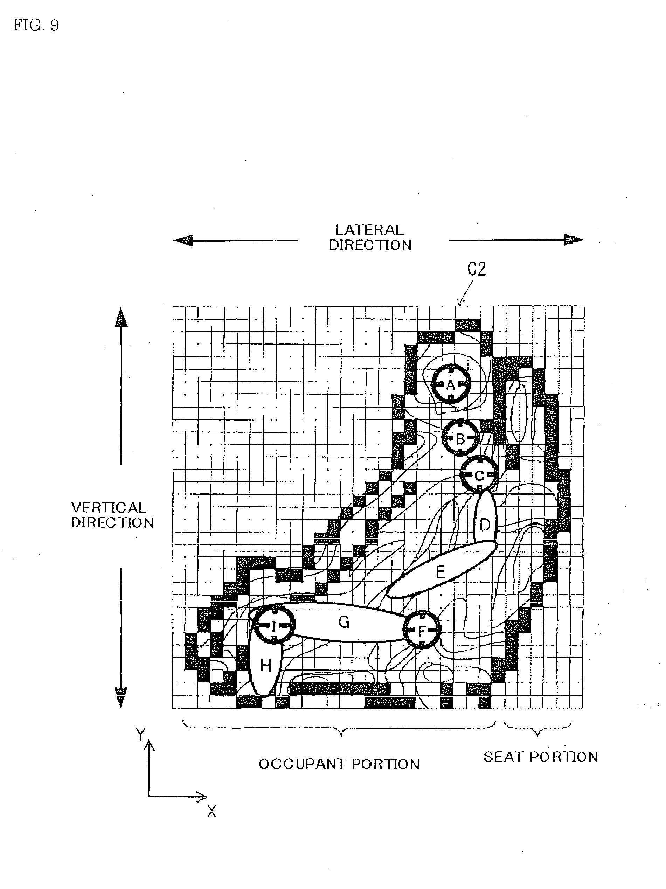

At step S105 in Fig. 4, predetermined regions of the driver C are detected based on the information of regional features shown in Fig. 8. This detection process is carried out by the region detecting section 172 of the computing means 170 shown in Fig. 1. Specifically, the detection of the respective regions is achieved by assigning (correlating) the information of regional features of the respective regions shown in Fig. 8 to the segmentation-processed image C2 shown in Fig. 7. For example, a region having information of features of head can be detected (specified) as a head of the driver C. Accordingly, results of detection of the respective regions of the driver C in this embodiment are shown in Fig. 9. Regions marked with A through H in Fig. 9 correspond to regions A through H in Fig. 8. For example, a region marked with A in Fig. 9 is detected as the head of the driver C.

The detection of the predetermined regions of the driver C at step S104 and step S105 can be conducted on the condition that the object on the image taken by the camera 112 is a human being. Specifically, when the segmentation-processed image C1 shown in Fig. 7 is an image indicating a child seat or an object other than a human being, the processes after step S104 are cancelled, i.e. the physique determining process is terminated.

At step S106 in Fig. 4, the physique of the driver C is determined from the positional relations between the respective regions detected at step S105. This determining process is carried out by the physique detecting section 174 of the computing means 170 in Fig. 1. Specifically, distances between the predetermined regions are computed using the three-dimensional positional information of the respective regions. From the result of the computation, the physique of the driver C is determined (estimated). For example, assuming that a three-dimensional coordinate of the shoulder is (a, b, c) and a three-dimensional coordinate of the hip is (d, e, f), the regional distance L between the shoulder and the hip is represented as L = ((d-a)² + (e-b)² + (f-c)²)^{0.5}. By using such calculation, regional distances among the head, the neck, the shoulder, the hip, and the knee are calculated. If the relations between the regional distances and physique are previously stored, the physique of the driver C can be determined according to the magnitude of the regional distances. In this case, each regional distance may be a length of a line directly connecting two regions or a length of a line continuously connecting three or more regions. As mentioned above, in this embodiment, the physique of the driver C can be easily detected using results of detection of the predetermined regional distances of the driver C.

Alternatively, when there are recognized relations about physique such as shoulder width and seated height, the shoulder width and the seated height are obtained based on the positions of both shoulder joints (joints between blade bones and upper arm bones), thereby determining the physique of the driver C.

Among various regional distances of a human body, especially the shoulder width is closely correlated with the physique. Therefore, by deriving the physique based on the shoulder width, the precision of determination of the physique of the driver C can be improved. However, the shoulder joints which are inflexion points of the shoulder region vary considerably from person to person. Accordingly, for detecting the positions of the shoulder joints, it is preferable that a plurality of portions in ranges from the root of neck to the upper arms are detected over time.

Since this embodiment is structured to detect a three-dimensional image by the camera 112, such a problem that the depth of image is not considered as in the arrangement of detecting a two-dimensional image can be resolved. Therefore, even in case of detecting the seated height of the driver C leaning forward for example, precise detection can be ensured.

The result of physique determination of the driver C derived by the physique determining section 174 is stored in the storing means 150 (the storing section 152) at step S107. The result of physique determination may be stored in the ECU 200.

The information of the physique determination stored at step S107 is read out from the storing means 150 (the storing section 152) shown in Fig. 1 at step S120 when the actuation condition of the operation device 210 is satisfied at step S110 in Fig. 3. Then, at step S130 shown in Fig. 3, an actuation control signal is outputted from the ECU 200 to the operation device 210.

In case that the operation device 210 is an occupant restraining device for restraining an occupant by an airbag and/or a seat belt, the actuation condition is satisfied by detection of occurrence or prediction of a vehicle collision and an actuation control signal to be outputted to the operation device 210 is changed according to the result of the physique determination. For example, a control can be achieved to change the deployment force of the airbag according to the physique of the vehicle occupant.

In this embodiment, a process for determining the attitude of the driver C may be conducted in stead of or in addition to the "physique determining process" shown in Fig. 4. That is, in the present invention, the control means 120 may conduct at least one of the process for determining the physique of the driver C and the process for determining the attitude of the driver C.

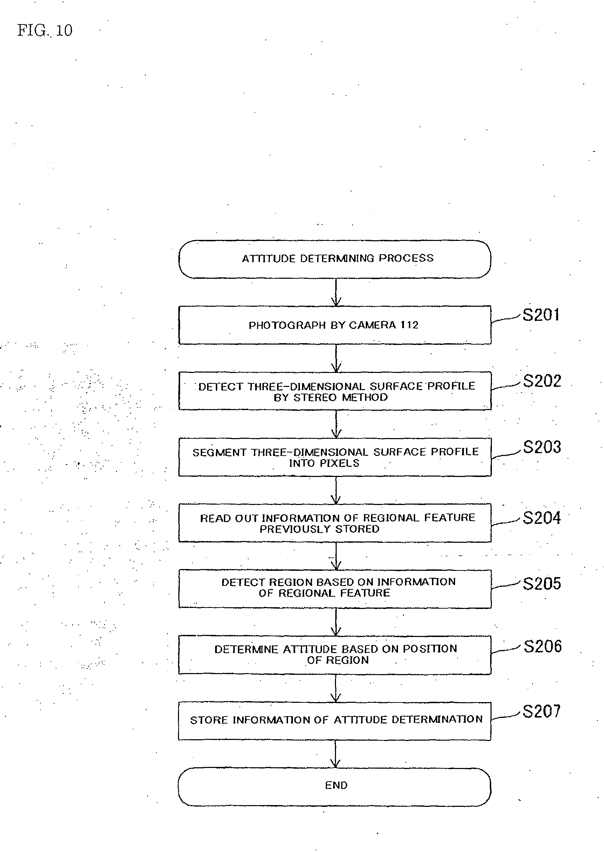

Fig. 10 shows a flow chart of the "attitude determining process" of this embodiment. In this embodiment, the "attitude determining process" is carried out by the control means 120 of the vehicle occupant detecting system 100 shown in Fig. 1. The control means 120 of this case correspond to "processing means for determining whether or not the vehicle occupant sits in the vehicle seat in an attitude of normal state" of the present invention.

Steps S201 through S205 shown in Fig. 10 are carried out by the same processes as step S101 through S105 shown in Fig. 4.

At step S206 in Fig. 10, the attitude of the driver C is determined from position(s) of one or more predetermined region(s) detected at step S205. Specifically, it is determined whether or not the driver C sits in the driver's seat 12 in normal state. The "normal state" used here means a state that, in the normal position (standard sitting position) on the driver's seat 12, the back of the driver C closely touches the seat back and the head of the driver C is located adjacent to the front surface of the head rest. Position out of the normal position is called outlying position relating to the driver C, so called "out-of-position (OOP)". For example, when as a result of detection of the head position of the driver C, the head of the driver C is in a standard zone previously stored, it is determined that the driver C sits in the driver's seat 12 in the normal state. On the other hand, when the head is in an outlying zone out of the standard zone previously stored, it is determined that the driver C does not sit in the driver's seat in the normal state. In this case, it is typically estimated that the driver C sits leaning forward. Other than the head of the driver C, neck, shoulder, upper arm, forearm, hip, upper thigh, lower thigh, knee, and/or chest may be selected as the predetermined region. As mentioned above, in this embodiment, the attitude of the driver C can be easily detected using results of detection of the position(s) of the predetermined region(s) of the driver C.

The result of the attitude determination of the driver C is stored in the storing means 150 (the storing section 152) at step S207. The result of the attitude determination may be stored in the ECU 200.

Information of the attitude determination stored at step S207 is read out from the storing means 150 (the storing section 152) when the actuation condition of the operation device 210 is satisfied at step S110 in Fig. 3. Then, an actuation control signal is outputted from the ECU 200 to the operation device 210.

In case that the operation device 210 is an occupant restraining device for restraining an occupant by an airbag and/or a seat belt, the actuation condition is satisfied by detection of occurrence or prediction of a vehicle collision and an actuation control signal to be outputted to the operation device 210 is changed according to the result of the attitude determination. For example, when the vehicle occupant is in an attitude having his head near the airbag, a control can be achieved to reduce the deployment force of the airbag or cancel the deployment of the airbag in order to reduce or prevent the interference between the head and the airbag

As mentioned above, the vehicle occupant detecting system 100 of this embodiment is structured to easily and precisely detect the physique and/or attitude of the driver C as information about the driver C on the driver's seat by conducting the "physique determining process" shown in Fig. 4 and/or the "attitude determining process" shown in Fig. 10. Especially, even when there is a small difference in color between the background and the driver C or a small difference in color between the skin and the clothes of the driver C, even in case of detecting the seated height of the driver C who is in a state leaning forward, or even in case of detecting the position of the head of the driver C who is in a state leaning forward, the system of detecting three-dimensional image ensures precise detection as compared with the system of detecting two-dimensional image. Among various regional distances of a human body, especially the shoulder width is closely correlated with the physique. Therefore, by deriving the physique based on the shoulder width, the precision of determination of the physique of the driver C can be improved.

According to this embodiment, the actuation of the operation device 210 can be controlled in a suitable mode according to the results of the detection of the vehicle occupant detecting system 100, thereby enabling detailed control for the operation device 210.

Further, according to this embodiment, there is provided a vehicle mounted with a vehicle occupant detecting system capable of easily and precisely detecting information about the physique and the attitude of the driver C on the driver's seat 12.

The present invention is not limited to the aforementioned embodiment and various applications and modifications may be made. For example, the following respective embodiments based on the aforementioned embodiment may be carried out.

Though the aforementioned embodiment has been described with regard to a case that the driver C on the driver's seat 12 is the object to be detected by the camera 112, in this invention the object to be detected by the camera 112 may be a passenger on a front passenger seat or a rear seat other than the driver. In this case, the camera may be suitably installed in various vehicle body components such as an instrument panel positioned in an anterior portion of an automobile body, a pillar, a door, a windshield, and a seat, according to need.

Though the aforementioned embodiment has been described with regard to the arrangement of the vehicle occupant detecting system 100 to be installed in an automobile, the present invention can be adopted to object detecting systems to be installed in various vehicles other than automobile such as an airplane, a boat, a bus, a train, and the like.

## Claims

1. A vehicle occupant detecting system (100) comprising:
a three-dimensional surface profile detecting means (112) disposed to face a vehicle seat (12, 22) for detecting a three-dimensional surface profile of a vehicle occupant (C) on a vehicle seat (12, 22) from a single view point;
a digitizing means (130) for digitizing the three-dimensional surface profile detected by the three-dimensional surface profile detecting means (112) into a numerical coordinate system;
a storing means (150) for previously storing information of features on three-dimensional surface profile of a plurality of regions among respective regions of a human body;
a position detecting means (172) for detecting information about positions of a plurality of regions of the vehicle occupant (C) by correlating the numerical coordinate system digitized by the digitizing means (130) to the information of features previously stored in the storing means (150); and
a processing means (174) for computing a distance between predetermined regions using information detected by the position detecting means and deriving the physique of the vehicle occupant (C) based on the computed distance between the predetermined regions.

2. A vehicle occupant detecting system (100) as claimed in claim 1, wherein
the processing means (174) computes a shoulder width as the distance between the predetermined regions of the vehicle occupant and derives the physique of the vehicle occupant (C) based on the computed shoulder width of the vehicle occupant (C).

3. A vehicle occupant detecting system (100) comprising:
a three-dimensional surface profile detecting means (112) disposed to face a vehicle seat (12, 22) for detecting a three-dimensional surface profile of a vehicle occupant (C) on a vehicle seat (12, 22) from a single view point;
a digitizing means (130) for digitizing the three-dimensional surface profile detected by the three-dimensional surface profile detecting means (112) into a numerical coordinate system;
a storing means (150) for previously storing information of features on three-dimensional surface profile of a predetermined region among respective regions of a human body;
a position detecting means (172) for detecting information about the position of a predetermined region of the vehicle occupant (C) by correlating the numerical coordinate system digitized by the digitizing means (130) to the information of features previously stored in the storing means (150); and
a processing means (120) for determining whether or not the vehicle occupant (C) sits in the vehicle seat in an attitude of normal state based on the information detected by the position detecting means (172).

4. An operation device controlling system comprising:
a vehicle occupant detecting system (100) as claimed in any one of claims 1 through 3;
an operation device (210) which is actuated based on the information obtained by the processing means (120; 174) of the vehicle occupant detecting system (100); and
an actuation control means (200) for controlling the actuation of the operation device (210).

5. A vehicle comprising an engine/running system; an electrical system; an actuation control device (200) for conducting the actuation control of the engine/running system and the electrical system; and a vehicle occupant detecting means (100) for detecting information about a vehicle occupant (C) on a vehicle seat (12, 22), wherein
the vehicle occupant detecting means (100) comprises a vehicle occupant detecting system (100) as claimed in any one of claims 1 through 3.
